# EUROPÄISCHE PATENTSCHRIFT

(11) **EP 0 564 614 B1**
(45) Veröffentlichungstag und Bekanntmachung des Hinweises auf die Patenterteilung: **28.06.1995**
(21) Anmeldenummer: 92921086.2
(22) Anmeldetag: 12.10.1992
(51) Int. Cl.: B27B 17/00, B28D 1/18, B28D 1/08, B27B 23/00, B27F 5/02, B23D 59/00

(54) **PERLENKETTENFÖRMIGES FRÄSGERÄT MIT VORWÄRTSGETRIEBENEN UND GEGENSINNIG DREHENDEN FRÄSRINGEN**
CHAIN-LIKE CUTTING TOOL WITH FORWARD-DRIVEN COUNTER-ROTATING CUTTING RINGS
FRAISEUSE TYPE CHAINE A ANNEAUX MUS VERS L'AVANT ET DANS DES SENS DE ROTATION CONTRAIRES

(30) Priorität: 25.10.1991 CH 3130/91
(43) Veröffentlichungstag der Anmeldung: 13.10.1993
(73) Patentinhaber: RESERWA AG, CH-3645 Gwatt (CH); VITESSE ETABLISSEMENT, FL-9490 Vaduz (LI)
(72) Erfinder: WENGER, Ernst, CH-3645 Gwatt (CH)
(74) Vertreter: Keller, René, Dr.
(86) Internationale Anmeldenummer: CH9200208
(87) Internationale Veröffentlichungsnummer: WO9308001

(56) Entgegenhaltungen:
- EP-A- 0 364 322
- WO-A-82/01503
- US-A- 1 374 525

## Beschreibung

### Technisches Gebiet

Die Erfindung bezieht sich auf ein Abbaugerät, welches sich z.B. zum Abbrechen resp. Abreissen von Mauern aus Stein, Beton und dgl. oder von Holzkonstruktionen eignet.

### Stand der Technik

Primär beim Umbauen und Renovieren von Gebäuden kommt es vor, dass gezielt Wanddurchbrüche geschaffen oder Einbauten entfernt werden müssen. Ueberhaupt ist man in der Baubranche mit den unterschiedlichsten Aufgaben, wie z.B. dem Fräsen von Nuten, dem Anbringen von Ausnehmungen für Kabelkästen, dem Schneiden von Stahl oder dem Anbringen von Kernbohrungen, konfrontiert. Diese Arbeiten sind bis anhin in der Regel mit Abbauhämmern und Schneidbrennern und Diamantfräsgeräten mit Wasserkühlung durchgeführt worden. Viele dieser Geräte sind aber auf ganz bestimmte Anwendungen ausgerichtet. Bei allen Fräsvorgängen handelt es sich um ein reines Abspanen bei entsprechend grosser Wärmeentwicklung.

### Darstellung der Erfindung

Zweck der Erfindung ist es nun, ein Arbeitsgerät anzugeben, das für die unterschiedlichsten Aufgaben eingesetzt werden kann, wobei unter Fräsen eine Kombination aus Abspanen und Zertrümmern verstanden wird.

Bei einem erfindungsgemässen Arbeitsgerät werden mehrere Fräsringe auf einem runden Führungsbügel vorwärtsgetrieben, wobei der Führungsbügel mindestens zwei entlang seiner Aussenseite gegensinnig umlaufende helixartige Nuten aufweist, und wobei aufeinanderfolgende Fräsringe mit einem Führungselement so in die gegensinnigen Nuten eingreifen, dass aufeinanderfolge Fräsringe gegenläufig rotieren, wenn sie entlang des Führungsbügels vorwärtsgetrieben werden. Die Fräsringe sind also wie eine Perlenkette entlang des Führungsbügels aufgereiht. Werden sie vorwärtsbewegt, dann führen sie eine rotierende Bewegung aus, welche dazu angetan ist, den abzubauenden Festkörper entsprechend aufzufräsen.

Vorzugsweise hat jeder Fräsring eine Angriffsstelle für das Eingreifen eines Antriebselements. Die Fräsringe sind wie bei einer Perlenkette unmittelbar aufeinanderfolgend. Sie berühren sich, so dass beim Vorwärtstreiben eines einzelnen Fräsrings alle anderen ebenfalls vorwärtsgetrieben werden. Die Fräsringe sind also unabhängige Elemente, die von aussen angetrieben werden.

Vorzugsweise ist das Antriebselement ein Zahnrad, das an geeigneter Stelle an den Fräsringen angreift. Die Fräsringe sind zu diesem Zweck vorzugsweise an ihren Enden so verengt, dass sich zwischen benachbarten Fräsringen eine Art Ausnehmung ergibt, in die das Zahnrad eingreifen kann. Anstelle eines Zahnrades kann im Prinzip auch ein Kettenantrieb treten, bei welchem in der Antriebskette eingefügte Antriebsnocken in die dafür vorgesehenen Ausnehmungen der Fräsringe eingreifen.

Die Fräsringe selbst sind nicht vollständig geschlossen, sondern an einer Stelle offen, so dass sie an einer Halterung des Führungsbügels vorbeigeführt werden können.

Der Führungsbügel ist eine in sich selbst geschlossene Stange. Er ist mit Vorteil auswechselbar in einer Antriebseinheit fixiert. Der Bügel kann aus zwei zusammenfügbaren Führungsstangen bestehen oder zu einem einstückigen Ring verschweisst sein.

Der Führungsbügel weist eine Längsrippe auf, an der er in der Antriebseinheit festgehalten werden kann. Die Nuten verlaufen im Bereich der Längsrippe parallel zu dieser, so dass die offenen Fräsringe an der Längsrippe vorbeigeführt werden können. Vorzugsweise verlaufen Nuten und Längsrippe rotationsfrei.

Da beim Antreiben durch das Zahnrad ein beträchtlicher Druck auf den Fräsring ausgeübt wird, ist es vorteilhaft, ein Kugellager auf einer dem antreibenden Zahnrad gegenüberliegenden Seite des Führungsbügels vorzusehen. Dieses Kugellager ist eine Art Widerlager, das verhindert, dass der Fräsring zu stark auf den Führungsbügel gepresst wird und infolgedessen die Gleitreibung nicht zu stark anwächst.

Die Fräsringe können statt mit Zahnrad- oder Kettenantrieb auch mit einer Art Linearmotor angetrieben werden. Bei einem solchen Antrieb werden im Führungsbügel Statorwicklungen vorgesehen. Die Fräsringe sind als Rotoren ausgebildet und werden durch das durch die Statorwicklungen erzeugte umlaufende elektromagnetische Feld gedreht und dadurch vorwärtsgetrieben.

Das soeben erwähnte Antriebsprinzip lässt sich ganz allgemein als Antriebseinrichtung für die unterschiedlichsten Anwendungen (z.B. Bahnen, Lifte etc.) anwenden. Eine solche Antriebseinrichtung zeichnet sich dadurch aus, dass auf einer runden, formstabilen Führungsschiene mindestens ein ringförmiges Element derart beweglich gelagert ist, dass es sich nur unter Ausführung einer schraubenartigen Bewegung entlang der Führungsschiene bewegen kann. Die als Stator im Sinn eines elektrischen Motors ausgebildete Führungsschiene dreht das mindestens eine ringförmige Element, das sich aufgrund seiner entsprechenden Führung auf der Führungsschiene vorwärts bewegt.

Beim erfindungsgemässen Arbeitsgerät kann auch ein Linearantrieb vorgesehen werden, der eine in Richtung der Vorwärtsbewegung zeigende Kraft auf die Ringe ausübt. Durch die Führung in einer helixartigen Nut ergibt sich bei der Vorwärtsbewegung gleichzeitig eine Rotation der Fräsringe. Der Vorteil von elektrischen Linearantrieben besteht darin, dass die Ringe entlang der gesamten Länge des Führungsbügels angetrieben werden können.

Gemäss einer weiteren bevorzugten Ausführungsform weist der Führungsbügel Kanäle für ein Kühlmedium auf, so dass von der Antriebseinheit her z.B. Druckluft in den Führungsbügel eingeführt werden kann, die am fräsenden Ende wieder ausströmt und die Fräsringe kühlt. Durch entsprechende Form der Austrittskanäle im Fräsring kann die im Kühlmedium vorhandene kinetische Energie auch zum Antrieb des Fräsrings selbst nutzbar gemacht werden.

Mit einer den Führungsbügel zumindest teilweise umgebenden Staubschutzhaube kann das abgebaute Material abgesaugt werden. Die Staubschutzhaube lässt sich z.B. mit Federkraft gegen die Antriebseinheit zurückschieben. Eine Absaugventilation zieht den Staub unter der Staubschutzhaube ab.

Vorzugsweise haben die helixartigen Nuten eine sich entlang des Führungsbügels ändernde Steighöhe. Es lässt sich auf diese weise ein kontinuierlicher Uebergang zwischen dem rotationsfreien Bereich in der Antriebseinheit und dem rotierenden Bereich am vorderen Ende des Bügels erzielen.

Weitere vorteilhafte Merkmale der Erfindung ergeben sich aus den abhängigen Patentansprüchen, der nachfolgenden Beschreibung und den Zeichnungen.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine schematische Darstellung eines erfindungsgemässen Arbeitsgerätes;
- Fig. 2: eine Darstellung des Führungsbügels mit helixartigen Nuten;
- Fig. 3: einen Achsenquerschnitt durch den Führungsbügel mit Längsrippe;
- Fig. 4: eine schematische Darstellung der Antriebsmittel im Achsenlängsschnitt des Führungsbügels; und
- Fig. 5: ein Achsenquerschnitt A-A gemäss Fig. 4.

In den Zeichnungen sind grundsätzlich gleiche Teile mit gleichen Bezugszeichen versehen.

### Wege zur Ausführung der Erfindung

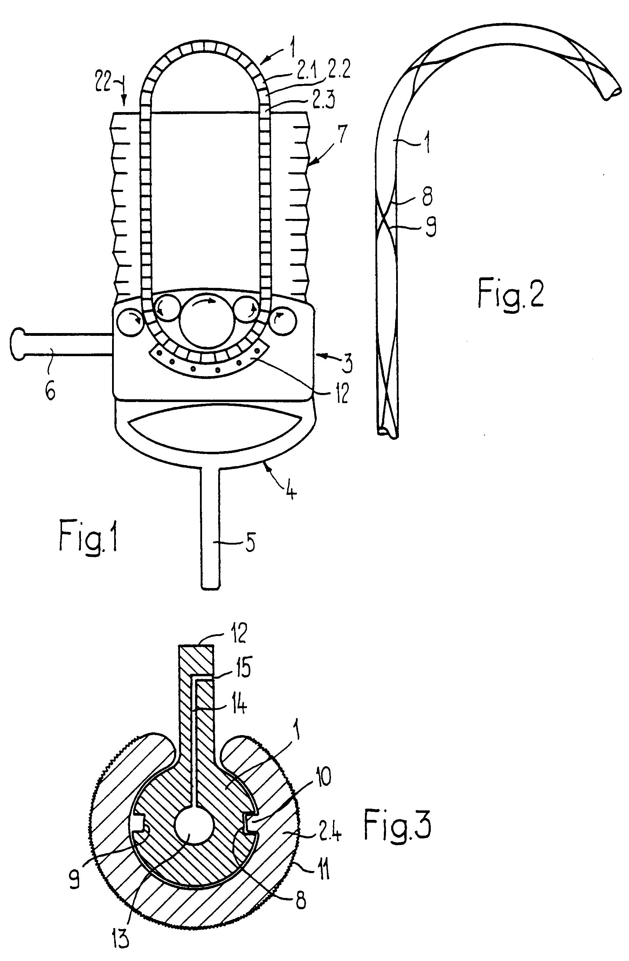

Fig. 1 zeigt schematisch eine bevorzugte Ausführungsform eines erfindungsgemässen Arbeitsgerätes. Ein Führungsbügel 1 mit darauf perlenartig aufgereihten Fräsringen 2.1, 2.2, 2.3... ist in einer Antriebseinheit 3 fixiert. Die Antriebseinheit 3 weist an ihrer Gehäuseaussenseite geeignet ausgebildete Griffe 4, 5, 6 auf. Diese können z.B. so ausgebildet sein, dass das Arbeitsgerät in der Art einer konventionellen Motorkettensäge geführt werden kann. Mit dem Griff 5 lässt sich das Arbeitsgerät z.B. in einer Geräteführungsvorrichtung befestigen, so dass das Arbeitsgerät nicht von Hand geführt werden muss und als Ganzes um seine Längsachse rotiert werden kann.

Gemäss einer vorteilhaften Ausführungsform ist eine balgenförmige Staubschutzhaube 7 vorgesehen. Sie bedeckt zumindest einen Teil des Führungsbügels 1. Unter Ueberwindung einer Federkraft kann sie nach hinten gegen die Antriebseinheit 3 zurückgeschoben werden (vgl. Pfeil 22). Wenn sich also beim Abbauen einer Mauer der vordere Teil des Arbeitsgerätes in das Material einfrisst, wird die Staubschutzhaube 7 sukzessive zurückgeschoben, weil sie an der Wand anliegt. Eine nicht näher dargestellte Absaugvorrichtung, die mit Vorteil in der Antriebseinheit untergebracht ist, saugt den unter der Staubschutzhaube befindlichen Staub ab.

Der Führungsbügel 1 ist in sich geschlossen. Im vorliegenden Beispiel ist er oval ausgebildet und hat infolgedessen ein rundes vorderes und ein rundes hinteres Ende und zwei dazwischenliegende, gerade Abschnitte. Er hat also die Form einer "0".

Fig. 2 zeigt einen Abschnitt des Führungsbügels 1 ohne Fräsringe. Das wesentliche Merkmal dieses Führungsbügels 1 ist das Vorhandensein von helixartigen Nuten 8, 9. Es sind dabei zumindest zwei gegensinnig umlaufende Nuten 8, 9 vorgesehen. Gemäss einer bevorzugten Ausführungsform ändert sich die Steighöhe der entsprechenden Helix entlang des Führungsbügels 1. In den geraden Zwischenabschnitten ist sie dabei grösser als im gekrümmten vorderen Bereich, wo primär gefräst wird und eine höhere Rotationsgeschwindigkeit erwünscht ist.

Die Fräsringe 2.1, 2.2, 2.3... greifen mit einem Führungselement, z.B. einem Zapfen, in eine der beiden gegensinnig drehenden Nuten ein. Beim Vorwärtsschieben entsteht dadurch eine rotierende Bewegung der Fräsringe. Gemäss der Erfindung greifen zwei unmittelbar aufeinanderfolgende Fräsringe 2.1 und 2.2 resp. 2.2 und 2.3 in je gegensinnig umlaufende Nuten. Dies hat in einleuchtender Weise zur Folge, dass sich die aufeinanderfolgenden Fräsringe stets gegenläufig drehen. Entsprechend entstehen beim Fräsen einander entgegengesetzte Kraftkomponenten bei benachbarten Fräsringen. Diese heben sich im wesentlichen auf, so dass das Arbeitsgerät weitgehend driftfrei fräst.

Anstelle des in die Nut eingreifenden Zapfens kann auch eine in einer halbkugelförmigen Ausnehmung (an der Innenseite des Fräsrings) gelagerte, in der helixförmigen Nut laufende Kugel verwendet werden. Eine solche kugellagerähnliche Führung zeichnet sich durch geringe Reibungsverluste aus.

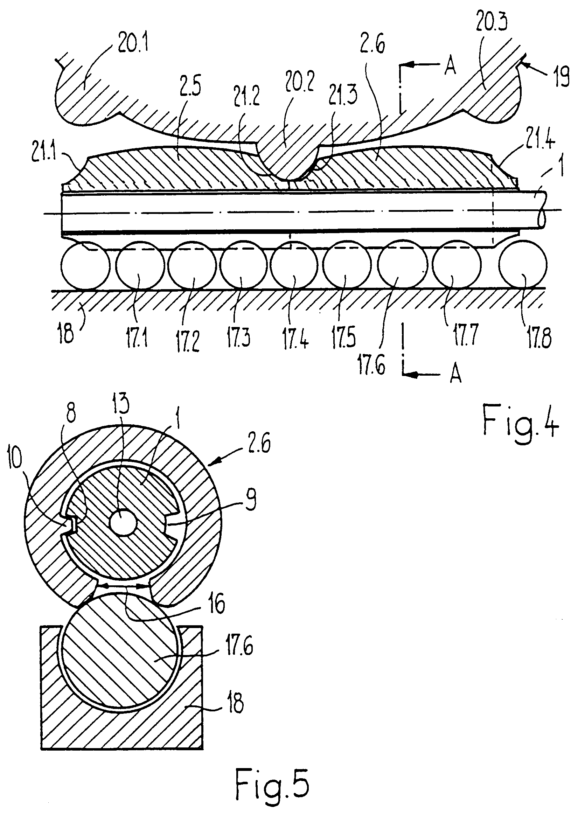

Fig. 3 zeigt einen Achsenquerschnitt des Führungsbügels 1 und des Fräsrings 2.4. Der Führungsbügel 1 ist im Querschnitt rund und weist in seinem Inneren einen Längskanal 13 auf. In diesem kann Druckluft oder ein Kühlungsmittel geführt werden. Die Zufuhr erfolgt über eine Einlassöffnung 15 und einen Zuführkanal 14. Die Einlassöffnung 15 ist an einer Längsrippe 12 des Führungsbügels 1 vorgesehen.

Die Längsrippe ermöglicht das Fixieren des Führungsbügels 1 in der Antriebseinheit 3. Wie aus Fig. 1 zu entnehmen ist, ist die Führungsrippe 12 im gekrümmten Teil des Führungsbügels 1 vorgesehen. Sie ragt kammartig nach aussen und ist vorzugsweise in einer Ebene gelegen, d.h. sie windet sich nicht um den Führungsbügel 1 herum.

Die Fräsringe sind so ausgebildet, dass sie an dieser Längsrippe vorbeikommen können. Dies soll anhand der Fig. 3 erläutert werden. Der Fräsring 2.4 ist kein geschlossener, sondern ein offener Ring. Der Spalt dieses Rings ist gerade so gross, dass die Längsrippe 12 in ihm Platz hat. Im Querschnitt sieht der Fräsring 2.4 also C-förmig aus.

Die Nuten 8 und 9 verlaufen parallel zur Längsrippe 12. Dies ist deshalb erforderlich, weil einerseits der Ring 2.4 mit seinem Führungselement 10 in eine der beiden Nuten 8 eingreift (und somit durch die Nut geführt wird) und andererseits die Längsrippe 12 im Spalt des Rings geführt werden muss.

Die Aussenseite des Fräsrings 2.4 ist in geeigneter Weise als Fräsfläche 11 ausgebildet. Für die Bearbeitung von Stein oder Beton kann es sich dabei z.B. um einen Belag mit eingelagerten Diamant-Kristallen handeln. Für die Bearbeitung von Holz können auf der Oberfläche z.B. Hartmetallzähne ausgebildet sein.

Wie in Fig. 1 dargestellt, ist die Längsrippe 12 z.B. mit Bohrlöchern versehen, so dass der Führungsbügel 1 auswechselbar in der Antriebseinheit 3 festgeschraubt werden kann.

Das Wesentliche an der Antriebseinheit 3 sind die Mittel zum Vorwärtstreiben der Fräsringe 2.1, 2.2, 2.3... . Dies ist in der Fig. 1 mit Rollen schematisch angedeutet. Eine vorteilhafte Ausführungsform dieser Antriebsmittel ist in den Fig. 4 und 5 dargestellt. Fig. 4 zeigt einen Achsenlängsschnitt. 2.5 und 2.6 bezeichnen zwei Fräsringe. Diese weisen an ihren Enden Verengungen 21.1 und 21.2 resp. 21.3 und 21.4 auf. Durch diese Verengungen (z.B. 21.2 und 21.3) entsteht zwischen zwei benachbarten Fräsringen 2.5 und 2.6 eine Art Ausnehmung, die als Angriffsstelle für ein Zahnrad 19 dienen kann. Dieses Zahnrad 19 weist in geeigneten Abständen Zähne 20.1 bis 20.3 auf. In Fig. 4 ist dargestellt, wie ein Zahn 20.2 zwischen zwei benachbarte Fräsringe 2.5 und 2.6 eingreift. Durch die Rotation des Zahnrades werden die Fräsringe vorangetrieben, wobei das Zahnrad selbst stets nur auf einen der Fräsringe Kraft ausübt, welcher dann seinerseits aber aufgrund des unmittelbaren Kontakts zu nachfolgenden Fräsringen alle anderen weitertreibt.

Da durch die Krafteinwirkung des Zahnrades nicht nur eine Längskomponente, sondern auch eine Querkomponente (d.h. eine radiale Komponente bzgl. der Achse des Führungsbügels 1) erzeugt wird, könnte eine unerwünscht hohe Reibung und damit Abnützung (zwischen Fräsring und Führungsbügel) entstehen, wenn nicht gewisse Gegenmassnahmen getroffen würden. Gemäss einer besonders bevorzugten Ausführungsform der Erfindung ist deshalb auf der bzgl. der Achse des Führungsbügels dem Zahnrad 19 diametral gegenüberliegenden Seite ein Kugellager als Widerlager vorgesehen. Das Kugellager weist Stahlkugeln 17.1 bis 17.8 auf, auf denen die Fräsringe vorzugsweise mit ihrer Oeffnung (Spalt) abrollen können.

Fig. 5 veranschaulicht die bevorzugte Form des Abrollens. Der Führungsbügel 1 und der Fräsring 2.5 sind im Achsenquerschnitt gezeigt (Schnitt A-A gemäss Fig. 4). Die Kugel 17.6 wird in bekannter Weise in einer Lagerschiene 18 geführt. Der Fräsring 2.5 rollt im Prinzip mit seinem Spalt 16 auf der Kugel 17.6 ab. Auf diese Weise kann der von der gegenüberliegenden Seite wirkende Druck (radiale Komponente) des Zahnrades 19 auf dem Fräsring 2.5 aufgefangen werden.

Im Prinzip genügt ein Zahnrad der beschriebenen Art zum Vortreiben der Fräsringe. Es kann aber vorteilhaft sein, die erforderliche Schubkraft mit mehreren Zahnrädern zu erzeugen. Die antreibenden Zahnräder werden z.B. von einem mit einem Getriebe in geeigneter Weise untersetzten Elektromotor angetrieben.

In der Antriebseinheit 3 (vgl. Fig. 1) ist gemäss einer bevorzugten Ausführungsform auch ein Ventilator zum Absaugen des Staubes unter der Staubschutzhaube 7 vorgesehen. Vorzugsweise hat die Antriebseinheit 3 auch einen Pressluftanschluss, über welchen Druckluft zugeführt werden kann, die in das Kanalsystem des Führungsbügels 1 eingespeist wird. Am vorderen Ende des Bügels sind geeignete Bohrungen vorgesehen, durch die die Druckluft ausströmen kann, so dass die Fräsringe gekühlt werden können.

Da die Luft resp. das Kühlmedium aus den genannten Bohrungen des Führungsbügels 1 mit grosser kinetischer Energie austritt, kann durch eine geeignete Ausrichtung der Bohrungen und/oder eine geeignete Führung der Luft entlang oder in den Fräsringen eine zusätzliche Antriebswirkung auf die Fräsringe ausgeübt werden. Die Antriebswirkung wird insbesondere durch eine am Fräsring vorgesehene Kanalform mit Luftumlenkeffekt erzielt.

Das ausströmende Kühlmedium kann aber auch dazu verwendet werden, das abzubauende Material mit Hilfe des temperaturmässigen Abschreckeffekts zu verspröden und damit die Abbaugeschwindigkeit zu erhöhen.

Wesentlich ist, dass die Führungsstange zwei gegensinnig drehende Helixnuten aufweist. Es liegt natürlich auch im Rahmen der Erfindung, wenn mehr als zwei Nuten vorgesehen sind. So kann es z.B. vorteilhaft sein, wenn für jede Drehrichtung zwei "synchron" drehende Nuten vorgesehen sind. Jeder Fräsring greift dann in beide "synchron" umlaufende Nuten ein. Auf diese Weise kann die Belastung auf zwei Führungselemente aufgeteilt werden.

Mit Vorteil haben gegensinnig umlaufende Helixnuten dieselben Steigungen. Damit kann gewährleistet werden, dass sich die Reisskräfte beim Abbauen optimal kompensieren (vgl. oben). Vor allem in einem belastungsfreien Teil, d.h. dort, wo in der Regel nicht gefräst wird (z.B. in der Nähe der Antriebseinheit 3), können die Steigungen aber ohne weiteres unterschiedlich stark sein.

Anstelle eines Zahnrades wäre auch ein Kettenantrieb möglich, der mit Nasen ausgestattet ist, die gerade so beabstandet sind, dass sie jeweils zwischen den aufeinanderfolgenden Fräsringen eingreifen können.

Beim oben beschriebenen Ausführungsbeispiel waren die Fräsringe untereinander nicht verbundene Einzelteile. Es liegt aber durchaus auch im Rahmen der Erfindung, die Fräsringe kettenartig untereinander zu verbinden, so dass sie über den Führungsbügel gezogen werden können. Es versteht sich, dass die Verbindung so ausgebildet sein muss, dass die Fräsringe gegeneinander frei rotierbar sind. So kann beispielsweise die Verbindung durch einen an einem Fräsring fixierten rohrförmigen Fortsatz mit Aussenwulst am Ende geschaffen werden, wobei der Aussenwulst am nachfolgenden Fräsring in geeigneter Weise in eine umlaufende rinnenförmige Ausnehmung eingreift. Bei einer solchen kettenartigen Verbindung kann natürlich der Antrieb der Fräsringe sowohl über Schub als auch über Zug erfolgen.

Wenn der Führungsbügel leicht elastisch (aber trotzdem stabil) ausgebildet ist, dann kann mit einer kleinen Vorrichtung der Bügel verformt werden, so dass das Fräsprofil den jeweiligen Bedürfnissen angepasst werden kann. Bei dieser Vorrichtung handelt es sich um einen Klemmbügel, der um die geraden Abschnitte des Führungsbügels gelegt werden kann und diese mehr oder weniger stark zusammenzieht. Damit die Fräsringe vorbeirollen können, weist der Klemmbügel an geeigneten Stellen Rollen auf.

Besonders vorteilhaft ist es, wenn die Fräsringe im Sinn eines elektrischen Linearmotors angetrieben werden. Das heisst, der Führungsbügel stellt den Stator dar, während die Fräsringe als Rotoren ausgebildet sind. So sind im Führungsbügel Statorwicklungen untergebracht, die ein rotierendes Magnetfeld erzeugen. Durch das Magnetfeld werden die in geeigneter Weise ausgebildeten Fräsringe zur Rotation gezwungen. Da sie wiederum im Eingriffbett einer helixförmigen Nut stehen, kann eine Rotationsbewegung nur in Verbindung mit einer Vorwärtsbewegung ausgeführt werden. Mit anderen Worten: Die Fräsringe werden vorwärtsgetrieben. Der Vorteil dieser Antriebsart besteht darin, dass sie nicht nur in dem im Griff resp. Gehäuse des Arbeitsgeräts verlaufenden Teil des Führungsbügels auf die Fräsringe, sondern im wesentlichen entlang des ganzen Bügels wirken kann.

Es braucht natürlich nicht jeder Fräsring als Rotor ausgebildet zu sein. Es genügt, wenn einige, z.B. jeder zweite pro Nut, diese Funktion wahrnehmen.

Die soeben beschriebene Antriebseinrichtung beruht darauf, dass ein um den Führungsbügel rotierendes Magnetfeld eine azimutale Kraft auf den als Rotor ausgebildeten Fräsring ausübt. Die Umwandlung dieser azimutalen Kraft in eine Vorwärtsbewegung geschieht durch das Prinzip der helixartigen Führung. Es leuchtet ein, dass sich dieses Antriebskonzept in der Anwendung nicht auf das erfindungsgemässe Arbeitsgerät beschränkt, sondern auch für Lifte, Bahnen etc. eingesetzt werden kann.

Es können natürlich auch Linearantriebskonzepte verwendet werden, bei denen im Führungsbügel vorwärtslaufende Magnetfelder oder sogar vorwärtslaufende und gleichzeitig rotierende Magnetfelder durch den Führungsbügel zum Antreiben der in geeigneter Weise als Rotoren ausgebildeten Fräsringe erzeugt werden.

Zusammenfassend kann festgestellt werden, dass durch die Erfindung ein neuartiges, einfach und vielseitig anzuwendendes Arbeitsgerät geschaffen worden ist. Neben den eingangs erwähnten Aufgaben können auch weitere effizient erledigt werden. Als Beispiel sei das Erstellen eines Stollens oder Tunnels genannt. Diese Aufgabe lässt sich nämlich dadurch lösen, dass das Arbeitsgerät sehr gross dimensioniert und während des Bohrens um seine Längsachse rotiert wird.

## Patentansprüche

1. Arbeitsgerät, bei welchem mehrere Fräsringe (2.1 bis 2.6) auf einem im Querschnitt runden Führungsbügel (1) vorwärtsgetrieben werden, wobei der Führungsbügel (1) mindestens zwei entlang seiner Aussenseite gegensinnig umlaufende, helixartige Nuten (8, 9) aufweist, und wobei aufeinanderfolgende Fräsringe (2.1. 2.2) mit einem Führungselement (10) so in die gegensinnigen Nuten (8, 9) eingreifen. dass die aufeinanderfolgenden Fräsringe (2.1, 2.2) gegenläufig rotieren. wenn sie vorwärtsgetrieben werden.

2. Arbeitsgerät nach Anspruch 1, dadurch gekennzeichnet, dass jeder Fräsring (2.1 bis 2.6) eine Angriffsstelle für das Eingreifen eines Antriebselements (19, 20.1 bis 20.3) hat und dass die Fräsringe (2.1 bis 2.6) sich gegenseitig berührend aufeinanderfolgen, so dass beim Vorwärtstreiben eines einzelnen Fräsrings (2.5) alle vorangehenden ebenfalls vorwärtsgetrieben werden.

3. Arbeitsgerät nach Anspruch 2, dadurch gekennzeichnet, dass das Antriebselement ein Zahnrad (19) ist und dass die Fräsringe (2.5, 2.6) an ihren Enden so verengt sind, dass das Zahnrad (19) bei den Verengungen (21.1 bis 21.4) angreifen kann.

4. Arbeitsgerät nach einem der Ansprüche 1 bis 3, dadurch gekennzeichnet, dass die Fräsringe (2.1 bis 2.6) offen sind, so dass sie an einer Halterung (12) des Führungsbügels (1) vorbeigeführt werden können.

5. Arbeitsgerät nach einem der Ansprüche 1 bis 4, dadurch gekennzeichnet, dass der Führungsbügel (1) in sich selbst geschlossen ist und dass er auswechselbar in einer Antriebseinheit (3) fixierbar ist.

6. Arbeitsgerät nach Anspruch 5, dadurch gekennzeichnet, dass der Führungsbügel (1) zum Fixieren in der Antriebseinheit (3) eine Längsrippe (12) aufweist, und dass die Nuten (8, 9) im Bereich der Längsrippe (12) rotationsfrei und parallel zur Längsrippe (12) verlaufen, so dass die offenen Fräsringe (2.4) an der Längsrippe (12) vorbeigeführt werden können.

7. Arbeitsgerät nach einem der Ansprüche 3 bis 6, dadurch gekennzeichnet, dass als Widerlager für die Fräsringe (2.5, 2.6) ein Kugellager (17.1 bis 17.8, 18) auf einer dem antreibenden Zahnrad (19) gegenüberliegenden Seite des Führungsbügels (1) vorgesehen ist.

8. Arbeitsgerät nach einem der Ansprüche 1 bis 7, dadurch gekennzeichnet, dass der Führungsbügel (1) Kanäle (13, 14) aufweist, so dass von der Antriebseinheit (3) her ein Kühlmittel, insbesondere Druckluft, eingeführt werden kann, das zur Kühlung der Fräsringe (2.1 bis 2.3) an anderer Stelle aus dem Führungsbügel (1) ausströmt.

9. Arbeitsgerät nach einem der Ansprüche 1 bis 8, dadurch gekennzeichnet, dass eine gegen Federkraft zurückschiebbare Staubschutzhaube (7) den Führungsbügel (1) zumindest teilweise abdeckt und dass der Staub mit Hilfe einer Absaugventilation abführbar ist.

10. Arbeitsgerät nach einem der Ansprüche 1 bis 9, dadurch gekennzeichnet, dass die helixartigen Nuten (8, 9) sich ändernde Steighöhen haben.

11. Antriebseinrichtung, bei welcher auf einer runden, formstabilen Führungsschiene mindestens ein ringförmiges Element derart beweglich gelagert ist, dass es sich nur unter Ausführung einer schraubenartigen Bewegung entlang der Führungsschiene bewegen kann, und bei der die Führungsschiene im Sinn eines elektrischen Linearmotors als Stator und das mindestens eine ringförmige Element als Rotor ausgebildet ist.

12. Arbeitsgerät nach einem der Ansprüche 1 bis 10, dadurch gekennzeichnet, dass zum Vorwärtstreiben der Fräsringe eine Antriebseinrichtung gemäss Anspruch 11 vorgesehen ist, wobei der Führungsbügel als Stator und die Fräsringe als Rotoren ausgebildet sind.

## Claims

1. Tool, in which a plurality of cutting rings (2.1 to 2.6) are driven forwards on a guide hoop (1) which is round in cross-section, the guide hoop (1) having at least two helical grooves (8, 9) running round in opposite directions along its exterior, and successive cutting rings (2.1, 2.2) engaging with a guide element (10) into the oppositely directed grooves (8, 9) in such a manner that the successive cutting rings (2.1, 2.2) rotate in opposite directions when they are driven forwards.

2. Tool according to claim 1, characterized in that each cutting ring (2.1 to 2.6) has a working point for the engagement of a drive element (19, 20.1 to 20.3) and that the cutting rings (2.1 to 2.6) succeed one another in mutual contact so that, when a single cutting ring (2.5) is driven forwards, all of the preceding cutting rings are likewise driven forwards.

3. Tool according to claim 2, characterized in that the drive element is a gearwheel (19) and that the cutting rings (2.5, 2.6) at their ends are so constricted that the gearwheel (19) may engage at the constrictions (21.1 to 21.4).

4. Tool according to one of claims 1 to 3, characterized in that the cutting rings (2.1 to 2.6) are open so that they may be conveyed past a holding device (12) of the guide hoop (1).

5. Tool according to one of claims 1 to 4, characterized in that the guide hoop (1) is self-contained and that it is fixable in an exchangeable manner in a drive unit (3).

6. Tool according to claim 5, characterized in that the guide hoop (1) for fixing in the drive unit (3) has a longitudinal rib (12), and that the grooves (8, 9) in the region of the longitudinal rib (12) extend free of rotation and parallel to the longitudinal rib (12) so that the open cutting rings (2.4) may be conveyed past the longitudinal rib (12).

7. Tool according to one of claims 3 to 6, characterized in that, as an abutment for the cutting rings (2.5, 2.6), a ball bearing (17.1 to 17.8, 18) is provided at a side of the guide hoop (1) lying opposite the driving gearwheel (19).

8. Tool according to one of claims 1 to 7, characterized in that the guide hoop (1) has channels (13, 14) so that a cooling medium, in particular compressed air, may be introduced from the drive unit (3), which cooling medium flows out of the guide hoop (1) at a different point for cooling the cutting rings (2.1 to 2.3).

9. Tool according to one of claims 1 to 8, characterized in that a dust protection hood (7), which is retractable counter to spring force, at least partially covers the guide hoop (1) and that the dust is removable with the aid of a suction ventilation device.

10. Tool according to one of claims 1 to 9, characterized in that the helical grooves (8, 9) have varying pitches.

11. Drive device, wherein at least one annular element is movably supported on a round, dimensionally stable guide track in such a manner that it may move along the guide track only while simultaneously executing a helical movement, and wherein the guide track in the sense of an electric linear motor is designed as a stator and the at least one annular element is designed as a rotor.

12. Tool according to one of claims 1 to 10, characterized in that a drive device according to claim 11 is provided for driving the cutting rings forwards, the guide hoop being designed as a stator and the cutting rings being designed as rotors.

## Revendications

1. Outil dans lequel plusieurs anneaux de fraisage (2.1 à 2.6) sont mus vers l'avant sur un étrier de guidage (1) de section transversale ronde, l'étrier de guidage (1) présentant au moins deux rainures (8, 9) de type hélicoïdal, s'étendant périphériquement en sens contraire le long de sa face extérieure, et des anneaux de fraisage successifs (2.1, 2.2) pénétrant dans les rainures (8, 9) de sens contraire, par un élément de guidage (10), de manière que les anneaux de fraisage successifs (2.1, 2.2) tournent dans des directions opposées lorsqu'ils sont mus vers l'avant.

2. Outil selon la revendication 1, caractérisé par le fait que chaque anneau de fraisage (2.1 à 2.6) comporte une zone de venue en prise pour la pénétration d'un élément d'entraînement (19, 20.1 à 20.3) ; et par le fait que les anneaux de fraisage (2.1 à 2.6) se succèdent avec contact mutuel de telle sorte que, lors du mouvement vers l'avant imprimé à un anneau de fraisage individuel (2.5), tous les anneaux précédents soient semblablement mus vers l'avant.

3. Outil selon la revendication 2, caractérisé par le fait que l'élément d'entraînement est une roue dentée (19) ; et par le fait que les anneaux de fraisage (2.5, 2.6) sont rétrécis à leurs extrémités, de façon telle que la roue dentée (19) peut venir en prise dans la région des rétrécissements (21.1 à 21.4).

4. Outil selon l'une des revendications 1 à 3, caractérisé par le fait que les anneaux de fraisage (2.1 à 2.6) sont ouverts, si bien qu'ils peuvent être guidés en regard d'un support (12) de l'étrier de guidage (1).

5. Outil selon l'une des revendications 1 à 4, caractérisé par le fait que l'étrier de guidage (1) est par lui-même fermé ; et par le fait qu'il peut être consigné à demeure dans une unité d'entraînement (3), avec faculté de remplacement.

6. Outil selon la revendication 5, caractérisé par le fait que l'étrier de guidage (1) présente une nervure longitudinale (12) en vue de la consignation à demeure dans l'unité d'entraînement (3) ; et par le fait que les rainures (8, 9) ne tournent pas dans la région de la nervure longitudinale (12), et s'étendent parallèlement à cette nervure longitudinale (12), de sorte que les anneaux de fraisage ouverts (2.4) peuvent être guidés en regard de ladite nervure longitudinale (12).

7. Outil selon l'une des revendications 3 à 6, caractérisé par le fait qu'un roulement à billes (17.1 à 17.8, 18) est prévu, en tant que contre-butée pour les anneaux de fraisage (2.5, 2.6), sur un côté de l'étrier de guidage (1) qui est tourné à l'opposé de la roue dentée menante (19).

8. Outil selon l'une des revendications 1 à 7, caractérisé par le fait que l'étrier de guidage (1) présente des canaux (13, 14) pour permettre l'introduction, à partir de l'unité d'entraînement (3), d'un agent de refroidissement qui consiste notamment en de l'air comprimé et sort de l'étrier de guidage (1) dans une autre zone, en vue de refroidir les anneaux de fraisage (2.1 à 2.3).

9. Outil selon l'une des revendications 1 à 8, caractérisé par le fait qu'une hotte (7) de protection antipoussière, pouvant être rétractée en s'opposant à une force élastique, recouvre au moins partiellement l'étrier de guidage (1) ; et par le fait que la poussière peut être évacuée à l'aide d'une ventilation d'évacuation par aspiration.

10. Outil selon l'une des revendications 1 à 9, caractérisé par le fait que les rainures (8, 9) de type hélicoïdal présentent des pas variables.

11. Dispositif d'entraînement dans lequel au moins un élément annulaire est monté mobile, sur une glissière de guidage ronde, de forme stable, de telle sorte qu'il puisse se déplacer le long de la glissière de guidage uniquement en exécutant un mouvement hélicoïdal ; et dans lequel, au sens d'un moteur électrique linéaire, la glissière de guidage est réalisée sous la forme d'un stator et l'élément annulaire prévu au minimum est réalisé sous la forme d'un rotor.

12. Outil selon l'une des revendications 1 à 10, caractérisé par le fait qu'un dispositif d'entraînement conforme à la revendication 11 est prévu pour mouvoir les anneaux de fraisage vers l'avant, l'étrier de guidage étant conçu comme un stator et les anneaux de fraisage étant conçus comme des rotors.
